# EUROPÄISCHE PATENTSCHRIFT

(11) **EP 1 983 396 B1**
(45) Veröffentlichungstag und Bekanntmachung des Hinweises auf die Patenterteilung: **07.09.2011**
(21) Anmeldenummer: 08006828.1
(22) Anmeldetag: 04.04.2008
(51) Int. Cl.: G05D 1/02

(54) **Verfahren zum Abfahren einer Arbeitsfläche**
Method for moving along a work surface
Procédé de déplacement dans une surface de travail

(30) Priorität: 05.04.2007 DE 102007016913
(43) Veröffentlichungstag der Anmeldung: 22.10.2008
(73) Patentinhaber: Inmach Intelligente Maschinen GmbH, 89077 Ulm (DE)
(72) Erfinder: Kämpke, Thomas, 89075 Ulm (DE); Kluge, Boris, 89077 Ulm (DE); Strobel, Matthias, 89079 Ulm (DE)
(74) Vertreter: Meyer, Thorsten

(56) Entgegenhaltungen:
- DE-A1- 19 921 995
- DE-A1-102004 004 505
- DE-A1-102004 013 811
- FR-A- 2 876 466
- US-A1- 2005 188 494
- US-B1- 6 615 108
- US-B1- 6 703 973

## Beschreibung

Die Erfindung betrifft ein Verfahren zum Abfahren einer Arbeits-Fläche mit einem selbstfahrenden Flächenbearbeitungsgerät (Mobilgerät) mit einer Bearbeitungsvorrichtung. Des weiteren betrifft die Erfindung ein Flächenarbeitsgerät.

Bekannt sind selbstfahrende Geräte wie beispielsweise selbstfahrende Rasenmäher oder selbstfahrende Reinigungsroboter als Flächenbearbeitungsgeräte.

Ein ständig auftretendes Problem solcher selbständig fahrender Mobilgeräte ist die Ungenauigkeit der geräteinternen Positionsbestimmung. Dies bezieht sich auf eine oder mehrere Vorrichtungen des Mobilgeräts zur Bestimmung seiner Position wie beispielsweise Koordinaten, die den Aufenthaltsort des Mobilgeräts bis auf eine Ungenauigkeit beschreiben.

Bei Flächenbearbeitungsgeräten kann diese Ungenauigkeit größer sein als die Arbeitsbreite des Mobilgeräts wie z.B. die Bürste oder Kehreinheit eines Reinigungsgeräts oder das Mähwerk einer Mähmaschine oder die Abtasteinheit eines Minensuchgeräts. Sobald die Ungenauigkeit der Positionsbestimmung die Arbeitsbreite übersteigt, ist die Einhaltung einer geplanten Bewegung zur Flächenfüllung nicht mehr garantiert. Auch der Versuch zur bloßen Vergrößerung der Überlappung von Bewegungsbahnen des Mobilgeräts ist hier nicht hilfreich. D.h. durch Bahnabweichungen, die geräteseitig nicht erkannt werden, kann es zu unbearbeiteten Flächenteilen kommen. Diese sind ihrer Anzahl, Form und Größe nach unbekannt.

Ein ähnliches Problem tritt auf, wenn sich das Mobilgerät auf einem hügeligen Terrain bewegt. Wenn die Gerätebewegung nur für Ebenen, möglicherweise sogar auch für geneigte Ebenen geplant wird und/oder sich die Positionsbestimmung auch nur auf solche Ebenen bezieht, können terrainbedingte Abweichungen dazu führen, dass eine Flächenfüllung der gekrümmten Einsatzfläche ausbleibt, obwohl sie bei einer ebenen, möglicherweise geneigten Fläche erfolgt wäre.

Aus der DE 102004004505 A1 ist ein Verfahren zur Steuerung der Bewegung eines selbstfahrenden Bodenbearbeitungsgerätes und ein solches Gerät selbst bekannt, dass eine vollständige Flächendeckung mit verhältnismäßig geringem Aufwand an Sensoren und an Rechenkapazität erzielen soll, wobei das Bodenbearbeitungsgerät mit Sensoren zum Erfassen von der Außenkontur der zu bearbeitenden Bodenfläche ausstattet werden soll und die Außenkontur der Bodenfläche erfasst werden soll, wobei diese dann in einzelne Teilsegmente unterteilt und diese nacheinander anhand eines vorgegebenen Fortbewegungsmusters bearbeitet werden sollen. Die Teilsegmente sollen sich dabei gegenseitig überlappen können.

Aufgabe der Erfindung ist es ein Verfahren zum Abfahren einer Arbeits-Fläche mit einem selbstfahrenden Flächenbearbeitungsgerät zur Verfügung zu stellen, bei dem die Auswirkungen von Ortungsfehlern durch verbesserte Bewegungsmuster minimiert werden und eine vollständigere Flächenfüllung erfolgt.

Diese Aufgabe wird durch ein Verfahren zum Abfahren einer Arbeits-Fläche mit einem selbstfahrenden Flächenbearbeitungsgerät nach den Merkmalen des Anspruchs 1 und ein Flächenbearbeitungsgerät nach den Merkmalen des Anspruchs 15 gelöst.

Erfindungsgemäß ist ein Verfahren zum Abfahren einer Arbeits-Fläche mit einem selbstfahrenden Flächenbearbeitungsgerät (Mobilgerät) mit einer Bearbeitungsvorrichtung vorgeschlagen, wobei diese eine Arbeitsbreite definiert, wobei die Arbeitsfläche durch mehrere teilweise überlappende Überdeckungsstreifen mit der Bearbeitungsvorrichtung überstrichen wird, wobei die Breite eines Überdeckungsstreifens größer als die Arbeitsbreite ist, wobei die flächendeckende Bearbeitung eines Überdeckungsstreifens durch Abfahren mit der Bearbeitungsvorrichtung in einer Wirkbewegung resultierend aus einer Ausscherbewegung um einen geplanten Vorschub entlang des Verlaufs des Überdeckungsstreifens erfolgt. Das Abfahren erfolgt somit in einer effektiven, da Flächen füllenden Wirkbewegung, welche aus einer Vorschubbewegung und mit dieser überlagerten geeigneten Ausscherbewegung gebildet ist. Weiterhin werden auftretende Fehlausführungen in Richtung und/oder Länge der Wirkbewegung zur Definition eines äußeren und inneren Überdeckungsstreifens verwendet werden, wobei der äußere Überdeckungsstreifen als der Streifen charakterisiert wird der bei angenommener oder festgestellter Unsicherheit in der Positions- und Orientierungsbestimmung zusätzlich abgefahren werden muss um den inneren Überdeckungsstreifen mit der Bearbeitungsvorrichtung abzudecken. Dabei kann insbesondere der äußere Überdeckungsstreifen den Bereich der Überlappung der Überdeckungsstreifen zueinander bilden.

Gegenstand dieser Erfindung ist also ein Verfahren für ein sich selbstständig bewegendes Flachenbearbeitungsgerät, auch Mobilgerät genannt, mit einer Steuerung, das Ortungsfehlern mittels der erfindungsgemäßen Bewegungsmuster begegnet, so dass das Gerät die vollständige Füllung einer Arbeitsfläche bewerkstelligen kann. Derartige ortungsfehlertolerante Bewegungsmuster können verschiedenartig angelegt sein. Bei Flächenbearbeitungsgeräten sieht deren Steuerung z.B. vor, die wirksame Arbeitsbreite entlang einer Bahn zu vergrößern oder eine einzige Bahn durch eine Mehrzahl von Bahnen oder durch andere Bewegungen zu überdecken. Dabei wird eine Überbreite gegenüber der Arbeitsbreite des Mobilgeräts erzeugt.

Bevorzugterweise verlaufen die Überdeckungsstreifen zusammenhängend und wenigstens teilweise nebeneinander liegend entlang einer geplanten Vorschubbahn.

Von Vorteil verlaufen die Überdeckungsstreifen und/oder die Vorschubbahn und/oder die Ausscherbewegungen im Wesentlichen kreisförmig.

Von Vorteil bilden die Überdeckungsstreifen und/oder die Vorschubbahn und/oder die Ausscherbewegungen wenigstens teilweise Kreisbahnabschnitte.

Von Vorteil verlaufen die Überdeckungsstreifen und/oder die Vorschubbahn und/oder die Ausscherbewegungen im Wesentlichen zykloidenartig.

Von Vorteil beschreiben die Überdeckungsstreifen und/oder die Vorschubbahn und/oder die Ausscherbewegungen im Wesentlichen Bahnen von Lissajous-Figuren beschreiben.

Von Vorteil bilden die Überdeckungsstreifen und/oder die Vorschubbahn und/oder die Ausscherbewegungen wenigstens teilweise eine Spirale.

Von Vorteil sind die Überdeckungsstreifen und/oder die Vorschubbahn und/oder die Ausscherbewegungen im wesentlichen mäanderförmig nebeneinander liegend.

Von Vorteil sind die Überdeckungsstreifen und/oder die Vorschubbahn und/oder die Ausscherbewegungen im wesentlichen geradlinig oder der Krümmung der Vorschubbahn angepasst in Form einer Rechteckspirale angeordnet.

Nach einem weiteren vorteilhaften Verfahrensschritt ist vorgesehen, dass die Form des geplanten Vorschubs und/oder der überlagerten Ausscherbewegungen an die Außenkontur der Arbeits-Fläche und darin liegende auszusparende Bereiche angepasst wird dadurch, dass eine Wirkbewegung in einem oder mehreren Abschnitten je zwischen zwei Punkten der Arbeitsflächenberandung durch das Innere der Arbeitsfläche, insbesondere entlang der Arbeitsflächenberandung, verläuft, wobei die zwei Punkte insbesondere dadurch festgelegt sein können, dass eine zunächst vorgesehene Wirkbewegung die Arbeitsfläche an einem der beiden Punkte verlässt und am anderen zurückkehrt.

Ein weiterer vorteilhafter Schritt des Verfahrens sieht vor, dass bei Erkennung einer Fehlausführung der Bewegung entlang von Teilstücken des Bewegungsmusters eine Korrektur der Bewegungsausführung des selbstfahrenden Flächenbearbeitungsgeräts entsprechend der Fehlausführung in Position und/oder Richtung zu den Werten des Bewegungsmusters hinzugefügt wird
oder ein eigenständiges Korrekturmanöver durchgeführt wird, so dass in der weiteren Abfolge von Teilstücken Fehlausführungen vermieden oder gemindert werden können,
wobei die Fehlausführung insbesondere erkannt wird durch Vergleich von Soll- mit sensorisch gewonnenen Ist-Daten oder mit vermittels einer absoluten Lokalisierung gewonnener Daten oder durch Vergleich von tatsächlichem und erwartetem Aufschlagwinkel auf eine Berandung der Arbeits-Fläche oder eine hierzu in der Arbeitsfläche vorgesehene durch Sensoren erkennbare Navigationslinie.

Von Vorteil wird Korrekturmanöver die Wirkbewegung ein Teilstück rückwärts wiederholt oder die Überdeckungsstreifen und/oder die Vorschubbahn und/oder die Ausscherbewegungen werden neu geplant.

Ein weiterer vorteilhafter Verfahrensschritt sieht vor, dass wenn eine Flächendeckung im Überdeckungsstreifen ausbleibt oder bei Fortsetzung der Wirkbewegung ausbleiben wird, dann erfolgt ein Abfahren entlang der sich ändernden Schnittkante im Überdeckungsstreifen bis die Fehlüberdeckung beseitigt ist.

Von Vorteil für die lokale Überdeckung ist der Einbezug von geeigneter Sensorik zur Erkennung der bereits bearbeiteten Fläche, insbesondere der Kanten zwischen bearbeiteter und unbearbeiteter Fläche (z:B. Grasshöhendetektion zur Erkennung der Mähkante). So können insbesondere bei der Ausführung von benachbarten Bahnen die lokale Flächendeckung gewährleistet bzw. unterstützt werden. Diese sensorische Kanten-Erfassung, insbesondere die der Mähkante, ist bekannt und bereits Gegenstand zahlreicher Veröffentlichungen und
Patentanmeldungen. Nachteil der darauf basierenden bekannten Verfahren zur flächendeckenden Bearbeitung ist jedoch dass diese Verfahren ausschließlich auf die Führung des Arbeitsgerätes entlang dieser Kanten basieren, diese i.A. aber nicht während der gesamten Arbeitsausführung vorhanden sind.

Von Vorteil erfolgt der Vorschub entlang einer hierzu in der Arbeitsfläche vorgesehenen und durch Sensoren erkennbaren Navigationslinie oder entlang einer Berandung der Arbeits-Fläche und relativ zum Vorschub wird unter einem Abstoßungswinkel eine Bewegung des Mobilgeräts vollzogen und geplante Bewegungsmuster werden zur Überstreichung von Teilflächen der Arbeitsfläche ausgeführt.

Von Vorteil ist das Bewegungsmuster so ausgestaltet, dass ein Zurückkehren zur Navigationslinie nach wenigen gefahrenen Teilstücken und/oder geringer zurückgelegter Distanz erfolgt und eine erneute Abstoßung unter einem von der Steuerungseinrichtung gemäß der erfassten Richtung und/oder der Position in der Umgebung und/oder dem Verlauf der Navigationslinie festgelegten Abstoßungswinkel vollzogen wird.

Bevorzugterweise wird die Breite von Überdeckungsstreifen an Neigungen und/oder Unebenheiten innerhalb der Arbeitsfläche angepasst, insbesondere dadurch, dass die Breite der Überdeckungsstreifen proportional zur Geländeneigung und/oder Unebenheit vergrößert wird.

Nach einem weiteren Aspekt der Erfindung ist ein Flächenbearbeitungsgerät vorgeschlagen, welches eine Steuerungseinrichtung zur Ausführung des Verfahrens nach einem der Ansprüche 1 bis 17 beinhaltet.

Dem folgend sieht eine Ausgestaltung vor, dass es sich um ein selbstfahrendes Gerät zur Bodenbearbeitung, insbesondere einen Rasenmäher oder ein Reinigungsgerät handelt.

Das mobile Bodenbearbeitungsgerät bewegt sich selbständig und weist eine Bodenbearbeitungseinheit, eine Antriebseinheit und eine Steuereinheit sowie zur Navigation, insbesondere zur Lokalisierung, benötigte Sensorik auf.

Ortungsfehlertolerante Bewegungsmuster werden beispielsweise dadurch erzeugt, dass das Mobilgerät Teilbewegungen ausführt, die unter Zuhilfenahme von relativ genau arbeitender inkrementeller Sensorik ermöglicht werden. Die Fehlerakkumulation dieser Sensorik führt nach hinreichend fortgeschrittener Zeit oder nach hinreichend zurückgelegter Strecke auf eine Ungenauigkeit, die im Allgemeinen die der Posi,tionsbestimmung noch übersteigt. Bevor dieser Zustand erreicht wird, wird eine neue Positionsbestimmung durchgeführt und es wird eine neue Teilbewegung begonnen oder die aktuelle Teilbewegung wird an die neue Positionsinformation angepasst..

Die Ungenauigkeit der Positionsbestimmung kann durch Unsicherheitsregionen wie Unsicherheitskreise oder -ellipsen oder ähnliche Figuren beschrieben werden. Jede Unsicherheitsregion liegt in derjenigen Ebene für die das Mobilgerät die Bewegungsplanung ausführt. Im Fall von Kreisen ist der Mittelpunkt eines Unsicherheitskreises der durch die Vorrichtung zur Positionsbestimmung bestimmte Ort. Die Größe der Unsicherheitsregion kann so bemessen sein, dass die wahre Position enthalten ist.

Für die folgenden Ausführung des Verfahrens zur flächendeckenden Bewegungssteuerung ist es hilfreich die Begriffe der Vorschubbahn, der Wirkbewegung, Ausscherbewegungen sowie von inneren und äußeren (geplanten) Überdeckungsstreifen einzuführen und wie folgt zu definieren:

Das Mobilgerät führt Bewegungen aus, die nach Richtung und/oder Funktion unterschieden werden. Ein Vorschub oder eine Vorschubbahn (V) ist die Bewegung in einer Grundrichtung, in der sich das Mobilgerät relativ zu seiner Einsatzumgebung bewegt. Diese Grundrichtung kann sich in der Bewegungsabfolge ändern, und zwar gelegentlich, wie bei einem Rechteck, oder ständig, wie bei einer Spirale.

Der Vorschubbahn können andere Bewegungen überlagert werden, so dass daraus eine Wirkbewegung (W) resultiert. Beispielsweise kann der Vorschubbahn ein seitliches Ausscheren (Ausscherbewegungen (A)) überlagert werden. Oder die Vorschubbahn kann zugunsten einer anderen Bewegung unterbrochen werden. Es ist sogar zulässig, dass das Mobilgerät sog. Positionsbewegungen ausführt, also Bewegungen, die nur zur Bestimmung oder Korrektur der eigenen Position- und/oder Orientierung dienen.

Entlang der Vorschubbahn kann ein innerer Überdeckungsstreifen (IS) und ein äußerer Überdeckungsstreifen (AS) definiert werden. Der innere Überdeckungsstreifen bzw. die (resultierende Arbeits-)breite dessen wird vorzugsweise zur Planung der Vorschubbahn verwendet. Man kann die Planung hier beispielsweise näherungsweise so gestalten als ob ein Mobilgerät mit einer Arbeitsbreite entsprechend der Breite des inneren Überdeckungsstreifens eingesetzt würde. Der äußere Überdeckungsstreifen kann typischerweise als der Streifen charakterisiert werden welche bei angenommener Unsicherheit in der Positions- und Orientierungsbestimmung typischerweise abgefahren werden muss um den inneren Überdeckungsstreifen (ggf. garantiert) abzudecken.

Im folgenden werden einige Varianten der Erfindung beschrieben. Weitere, sinngemäße Varianten sind ebenfalls Bestandteil dieser Erfindung.

Beträgt die Positionsungenauigkeit höchstens r, so beinhaltet eine Ausformung der Erfindung ein Mobilgerät mit einer Steuerung so, dass ein innerer Überdeckungsstreifen der Breite r gefüllt wird. Jeder Unsicherheitskreis mit Radius r und Mittelpunkt innerhalb des inneren Überdeckungsstreifens kann durch einen Kreis mit Radius 2r überdeckt werden, sofern der Mittelpunkt diese Kreises im Unsicherheitskreis liegt. Entlang einer geradlinigen Bahn werden Unsicherheitskreise mit einem Vorschub von 1,5 r gelegt und mit Kreisen von Radius 2r überdeckt. Dies führt dazu, dass entlang der Bahn ein Streifen mit Breite r, der sich von der Bahn zu beiden Seiten je um 0,5 r erstreckt, garantiert überdeckt wird. Dies stellt in diesem Fall den inneren Überdeckungsstreifen dar.

Bei dieser Ausformung der Erfindung ist das Mobilgerät aufgrund seiner inkrementellen Sensorik in der Lage, Kreise mit Radien der Größe 2r flächenfüllend zu bearbeiten. Vorzugsweise beginnt die Wirkbewegung zur Kreisbearbeitung im Mittelpunkt. Die Wirkbewegung kann als eine Spiralbewegung ausgeformt sein, die im Mittelpunkt beginnt, den Radius proportional zum kumulierten Winkel aufweitet (Archimedische Spirale) und schließlich beim Wert 2r konstant bleibt und noch eine Drehung um 360 Winkelgrade durchführt. Die Spiralaufweitung wird durch die Arbeitsbreite des Mobilgeräts abzüglich einer geringen Überlappung bestimmt. Wesentlich bei diesem Vorgehen ist, dass die Richtung, in die das Mobilgerät bei Beginn jeder Wirkbewegung ausgerichtet ist, vollkommen unbekannt sein darf.

Eine weitere Variante dieser Erfindung betrifft ein Mobilgerät, dessen Steuerung einen Vorschub gemäß geplanter Linien ausführt, wobei entlang dieser Linien Wirkbewegungen in Form von Mäandern ausgeführt werden. Die Flächenfüllung von Unsicherheitskreisen erfolgt in dieser Variante also durch ein Muster von Parallelbahnen. Der Abstand der Parallelbahnen der Wirkbewegung wird durch die Arbeitsbreite des Mobilgeräts ggf. abzüglich einer vorgegebenen oder von der Steuerung des Mobilgerätes berechneten Überlappung festgelegt. Am Ende jeder der Parallelbahnen der Wirkbewegung dreht das Mobilgerät gemäß seiner kinematischen Eigenschaften. Ist eine Wirkbewegung beendet, setzt eine neue Wirkbewegung ein. Die Bahnen von verschiedenen Wirkbewegungen müssen nicht parallel verlaufen. Dieses Verfahren eignet sich insbesondere dann, wenn die Orientierungsgenauigkeit der Selbstlokalisation hoch ist.

Eine andere Variante betrifft ein Mobilgerät, das Ausscherungen wie Mäanderbewegungen ausführt, die quer zur Vorschubrichtung angelegt sind wobei das erste Wendemanöver einer Wirkbewegung entgegen der Vorschubrichtung ausgeführt wird, alle weiteren werden in Vorschubrichtung ausgeführt. Alternativ können mehr als nur das erste Wendemanöver entgegen der Vorschubrichtung ausgeführt werden, alle weiteren dann in Vorschubrichtung. Dies führt auf eine Verkleinerung nichtüberstrichener Flächenelemente bzw. auf eine Verkleinerung der Wahrscheinlichkeit für das Auftreten nicht überstrichener Flächenelemente beim Anschluss einer Wirkbewegung an die nächste. Dies gilt vor allem dann, wenn Positionsbestimmungen zu Beginn einer Wirkbewegung durchgeführt werden.

Anstelle der Nutzung einzelner Wirkbewegungen, die abschnittsweise zusammengesetzt werden, kann das Mobilgerät auch nahtlosen Bewegungsmustern mit Arbeitsbreitenvergrößerung folgen. Diese lassen sich als eine einzige Wirkbewegung im obigen Sinne auffassen, die den gesamten Arbeitsbereich überstreicht. Beispielsweise bewegt sich das Mobilgerät entlang von Mäandern aus Parallelbahnen, die quer zur Vorschubrichtung angeordnet sind oder das Mobilgerät bewegt sich entlang von Kreisen, die entlang einer Vorschubbahnen aufgereiht sind. Benachbarte Parallelbahnen sind um eine Distanz versetzt. Das Mobilgerät bewegt sich in entgegengesetzten Richtungen auf direkt benachbarten Parallelbahnen.

Eine andere Variante der Erfindung betrifft ein Mobilgerät, das eine geradlinige oder sogar gekrümmte Bahn mit einem Vorschub abfährt und dabei beidseitig bis zu einer vorgegebenen Breite ausschert und das Arbeitsgebiet flächenfüllend überstreicht.

Eine weitere Variante betrifft ein Mobilgerät, dass in einer horizontalen oder geneigten Ebene lediglich einfache Manöver ausführt wie etwa Parallelbahnen. Sobald mit einer Vorrichtung wie z.B. einem Neigungssensor festgestellt wird, dass die Ebene Krümmungen aufweist (Mulden, Kuppen), setzen entlang des Bahnvorschubs verbreiternde Arbeitsbewegungen ein. Diese werden beendet, sobald entlang eines weiteren Vorschubs auf der aktuell befahrenen Bahn ein ebener Verlauf der Arbeitsfläche festgestellt wird.

Eine wesentliche Variante der Erfindung betrifft ein Mobilgerät, dass über keine Vorrichtung zur absoluten Positionierung verfügt, dafür aber über sehr genaue inkrementelle Sensorik. Bei letzterem kann es sich um ein hochgenaues Kreiselsystem (Beschleunigungsmesssystem) oder um Odometrie (inkrementelle Wegzählung) oder um Odometrie kombiniert mit einem oder mehreren Gyroskopen (inkrementelle Winkelmessung) handeln. Ausgehend von einer initialen Position und Orientierung kann sich das Mobilgerät gemäß seiner Steuerung beispielsweise wieder entlang von Mäandern aus Parallelbahnen voreingestellter Länge, die quer zur Vorschubrichtung angeordnet sind, bewegen. Benachbarte Parallelbahnen sind wiederum versetzt. Das Mobilgerät bewegt sich in entgegengesetzten Richtungen auf unmittelbar benachbarten Parallelbahnen. Die Parallelbahnen können in einem beliebigen Winkel zur Berandung der Arbeitsfläche liegen.

Eine günstige Eigenschaft eines Mobilgeräts mit einer Steuerung zur Vergrößerung der Arbeitsbreite ist seine Anpassungsfähigkeit an lokale Gegebenheiten wie beispielsweise Hindernisse. Eine Wirkbewegung kann sowohl verkleinert werden als auch an Konturen angepasst werden. Ebenso kann eine Wirkbewegung abgebrochen werden, so dass eine neue Wirkbewegung gestartet werden kann.

Eine weitere, vorteilhafte Eigenschaft des Mobilgeräts besteht darin, dass es durch seine Steuerung auch in der Lage ist, Vorschub und Wirkbewegungen an Arbeitsflächenbegrenzungen anzupassen. Dabei spielt die Art der Arbeitsflächenbegrenzung keine Rolle.

Auch bei Arbeitsbreitenvergrößerung kann es zu einer unvollständigen Flächenüberdeckung kommen. Dies beispielsweise dadurch, dass Bahnen für den Vorschub zwar als Parallelbahnen geplant wurden, aber nicht parallel ausgeführt werden. Die fehlende Flächenüberdeckung ist in diesem Fall geringer als bei Parallelbahnen mit realer Arbeitsbreite. Wird die Vorschubrichtung am Rand der Arbeitsfläche geändert, so liegen die Flächenelemente ohne Überdeckung weiter innerhalb der Arbeitsfläche als bei realer Arbeitsbreite. Es wird somit eine breitere Bearbeitung des Randes der Arbeitsfläche vorgenommen.

Sofern die Bearbeitung einer Arbeitsfläche mittels Arbeitsbreitenvergrößerung und Vorschub entlang von Parallelbahnen bis zu einer Maximallänge garantiert flächenüberdeckend durchgeführt werden kann, ist es vorteilhaft, nur solche Bahnen zu verwenden. Sofern die Parallelbahnen an der Berandung der Arbeitsfläche beginnen oder enden, kann es vorteilhaft sein, von dort ins Innere der Arbeitsfläche bis zur Maximallänge vorzustoßen und dann an den Rand zurückzukehren, anstatt beispielsweise die Bewegung bis zum gegenüberliegenden Rand fortzuführen.

Die gegenüber der Arbeitsbreite erzeugte Überbreite muss nicht notwendigerweise konstant sein. Ein Merkmal dieser Erfindung ist, dass die Überbreite entlang der Vorschubbewegung und/oder der Abstand der Vorschubbewegungen zueinander gezielt variiert werden kann, z.B. bei Geländeunebenheiten.

Ebenso ein Merkmal dieser Erfindung ist, dass diese Überbreite entlang der Vorschubbewegung und/oder der Abstand der Vorschubbewegungen zueinander bei sich ändernder Unsicherheit in der Positionsschätzung (ggf. auch während der Bewegungsausführung ) variiert werden kann.

Weitere Vorteile der Erfindung ergeben sich aus den weiteren Unteransprüchen sowie deren möglicher Unterkombinationen.

Nachfolgend wird die Erfindung anhand der Zeichnungen weiter erläutert. Im Einzelnen zeigt die schematische Darstellung in:
- Fig. 1: eine schematische Darstellung eines Überdeckungsstreifens entsprechend dem erfindungsgemäßen Verfahren,
- Fig. 2: eine schematische Darstellung eines Überdeckungsstreifens mit Unsicherheit in der Positionsbestimmung,
- Fig. 3: eine schematische Darstellung einer erfindungsgemäßen Orientierungsanpassung,
- Fig. 4: eine schematische Darstellung einer Wirkbewegung mit kreisförmigen Ausscherbewegungen,
- Fig. 5: eine schematische Darstellung einer Wirkbewegung nach einem weiteren Beispiel,
- Fig. 6a: eine schematische Darstellung eines geplanten Vorschusses auf parallel geplanten Bahnen,
- Fig. 6b: eine schematische Darstellung eines tatsächlichen Vorschusses auf inkorrekt ausgeführten annähernd parallel geplanten Bahnen,
- Fig. 7a: eine Anwendung eines Mähroboters auf einem Fußballfeld,
- Fig. 7b: eine schematische Darstellung einer durch eine Behandlung limitierte Vorschubbewegung,
- Fig. 8a: eine schematische Darstellung einer Bewegungsplanung auf einem Fußballfeld,
- Fig. 8b: eine schematische Darstellung der Bewegungsplanung aus Fig. 8a nach einer Variante,
- Fig. 9a: eine schematische Darstellung einer an ein Hindernis angepassten Wirkbewegung,
- Fig. 9b: eine schematische Darstellung einer weiteren an ein Hindernis angepassten Wirkbewegung,
- Fig. 10: eine schematische Darstellung einer Wirkbewegungs-Planung unter Zuhilfenahme von Unsicherheitskreisen,
- Fig. 11: eine schematische Darstellung eines Bearbeitungskreises der mittels einer Spiral-Bewegung überstrichen wird,
- Fig. 12a: eine schematische Darstellung eines Korrekturmanövers,
- Fig. 12b: eine schematische Darstellung eines weiteren Korrekturmanövers,
- Fig. 13a: eine schematische Darstellung einer Variante des Verfahrens,
- Fig. 13b: eine schematische Darstellung eines Zyklus der Ausscherbewegung,
- Fig. 13c: eine schematische Darstellung einer Bewegungsplanung entsprechend Fig. 13b, und
- Fig. 14: eine schematische Darstellung einer Wirkbewegung, die an die Außenkontur angepasst wird.

Die in den Figuren gleichen Bezugsziffern bezeichnen gleiche oder gleich wirkende Elemente.

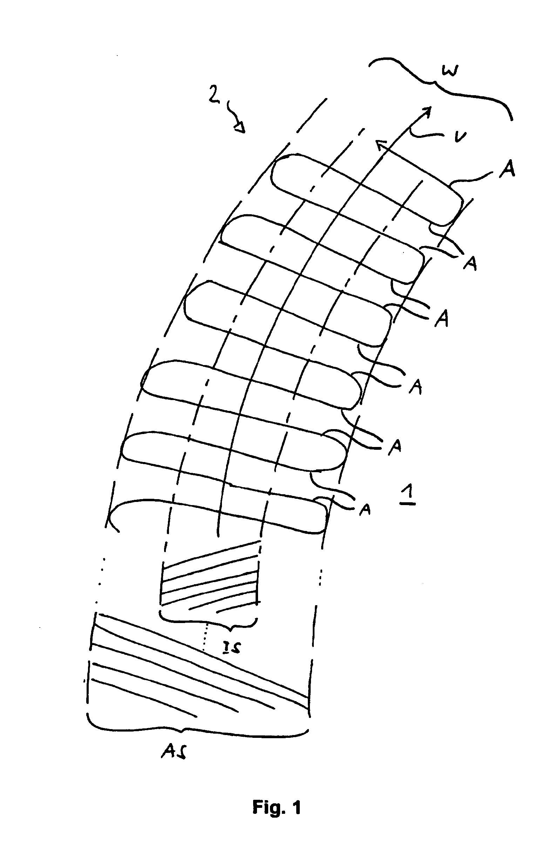

Fig. 1 dient zur Veranschaulichung der verwendeten Terminologie und stellt gleichzeitig eine bevorzugte Ausscherbewegung zur möglichst vollständigen Überdeckung des Überdeckungsstreifens mit der Bearbeitungsvorrichtung dar. In der Abbildung ist eine geplante Vorschubbahn (V) mit geplanten überlagerten mäanderförmigen Ausscherbewegungen (A) zu sehen welche in eine geplante Wirkbewegung (W) resultieren. Durch Ausführung der Wirkbewegung gemäß dieser Planung soll ein äußerer Überdeckungsstreifen (AS) möglichst vollständig abgedeckt werden. Für die Planung des Abfahrens der Arbeitsfläche durch mehrere ggf. überlappende Überdeckungsstreifen entlang einer Vorschubbahn wird der innere Überdeckungsstreifen (IS) herangezogen.

In dieser Zeichnung wie auch in den folgenden ist aus Gründen der Einfachheit und Klarheit die Ausscherbewegung des Zentrums der Bodenbearbeitungseinheit bzw. den Mobilgerätes bis an die Grenzen des äußeren Überdeckungsstreifens eingezeichnet. Aufgrund der Arbeitsbreite der Bodenbearbeitungseinheit ist es auch möglich um die halbe Arbeitsbreite früher abzuwenden.

Ähnliches gilt für den Fall falls die Bodenbearbeitungseinheit am Mobilgerät versetzt angebracht ist. Auch hier ist dies bei der exakten Planung der Trajektorie des Mobilgerätes für die Wirkbewegung entsprechend zu berücksichtigen.
In den Zeichnungen wird ohne Beschränkung der Allgemeinheit auch davon ausgegangen, dass das Mobilgerät in der Lage ist auf der Stelle zu drehen, wie dies beispielsweise bei einem Differentialantrieb der Fall ist. Bei anderen Fahrantrieben, insbesondere bei denen mit weiteren kinematikbedingten Einschränkungen, wie beispielsweise einer Begrenzung des Lenkwinkels und damit des minimalen Krümmungsradi ist dies entsprechend bei der konkreten Planung der Überdeckungsstreifen-füllenden Wirkbewegung zu berücksichtigen. Beispielsweise könnten im Fall einer Lenkwinkelbeschränkung die Wendungen zwischen den mäanderförmigen Bahnen als Sequenz von Fahrbewegungen vergleichbar dem Wenden eines PKWs durchgeführt werden. Im einer in Fig. 1 skizzierten bevorzugten Ausführungsform der Ausscherbewegungen werden die Ausscherbewegungen vorzugsweise senkrecht zur geplanten Vorschubbahn geplant und ggf. auch während der Ausführung angepasst. Bei einem nicht geradlinigen Verlauf der Vorschubbahn kann hierzu der Vorschub pro Ausscherbewegung entsprechend angepasst werden. Es ist offensichtlich, dass hier prinzipiell aber unterschiedliche Vorgehensweisen der lokalen flächendeckenden Ausscherbewegungen eingesetzt und / oder unterschiedliche Parameter zur lokalen Flächendeckung angepasst werden können.

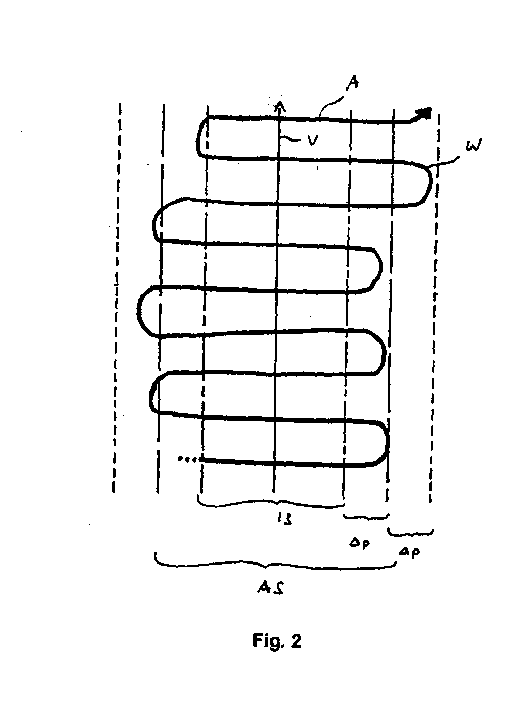

Fig. 2 zeigt am Beispiel einer bevorzugten Ausführungsform des Verfahrens dieser Erfindung. In diesem Beispiel wird eine Unsicherheit Δp von plus/minus 1,5 m in der Positionsbestimmung eines zur globalen Positionsbestimmung eingesetzten Systems vorausgesetzt. Das System zur globalen Positionsbestimmung kann hierbei sowohl ein einzelnes Lokalisierungssystem wie beispielsweise GPS/DGPS oder ein funkbasiertes lokales absolutes Ortungssystem (Local Positioning System, LPS) sein, als auch die Fusion (z.B. über ein Kalmanfilter) ein oder mehrerer Absolutortungssysteme ggf. mit inertialer Sensorik wie Odometrie, Gyroskop, Kompass und Beschleunigungssensorik und/oder anderen lokalisierungsunterstützenden Sensoren sein. Bei einigen Systemen hat dies u. A. den Vorteil, dass man neben einer ggf. verbesserten Schätzung der Eigenposition auch Information über die Orientierung des Mobilgeräts erhält; die Abkürzung "GPS" wird hier stellvertretend für globale Satellitennavigation verwendet, also beispielsweise für GPS, Galileo, GLONASS und/oder Kombinationen davon. In Fig. 2 ist nicht die geplante Wirkbewegung eingezeichnet sondern ein Beispiel für eine tatsächlich ausgeführte Wirkbewegung gegeben. Die geplante Wirkbewegung verläuft hier mäanderförmig innerhalb des äußeren Überdeckungsstreifens (AS). Durch den hier angenommenen Positionsfehler von maximal plus/minus 1,5m kann die tatsächlich ausgeführte Wirkbewegung den geplanten äußeren Überdeckungsstreifen über- bzw. unterschreiten. Als inneren Überdeckungsstreifen wird im Beispiel der Zeichnung der äußere geplante Überdeckungsstreifen abzüglich des Positionsfehlers angesetzt.

Ein wesentliches Merkmal der Erfindung ist, dass bei der Ausführung der Wirkbewegung die Positionsbestimmung nicht unmittelbar zum Ausregeln von Positionsfehlern entlang einer fest geplanten Wirkbahn eingesetzt wird sondern dass die auszuführende geplante Wirkbahn so angepasst wird, dass ein lokal flächendeckender Bewegungsablauf eingehalten wird. Im Beispiel aus Fig. 2 wird die Wendebewegung aufgrund der aktuellen Positionsinformation eingeleitet. Ein Ausgleich in der Orientierung wird hier hingegen nur so vorgenommen, dass eine Überlappung zweier aufeinander folgender mäanderförmiger Ausscherbewegungen eingehalten wird. Hier wird beispielsweise die Wirkbewegung so angepasst, dass die geplante Überlappung zwischen zwei aufeinander folgenden mäanderförmigen Ausscherbewegungen vergrößert wird und/oder eine Orientierungsanpassung pro Mäanderbahn beschränkt wird.

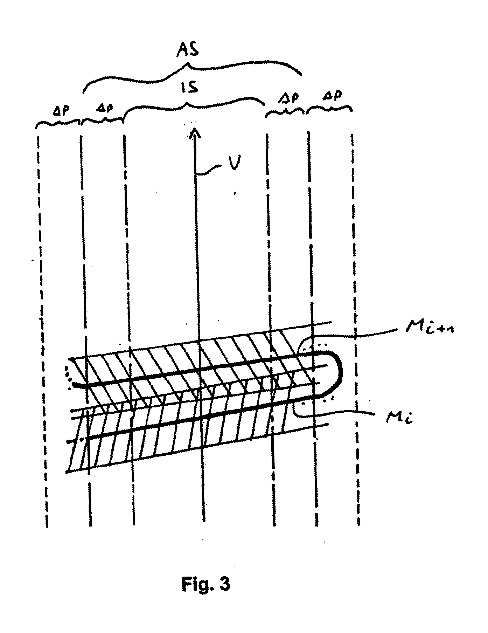

Fig. 3 zeigt ein Beispiel für eine solche Orientierungsanpassung. Obwohl eine Abweichung von der ursprünglich geplanten mäanderformigen Wirkbewegung (hier senkrecht zur geradlinigen Vorschubbewegung V schon während der Ausführung der Mäanderbewegung (Mi) erkannt wurde wird die Orientierung der Mäanderbewegung (Mi+1) nur so angepasst, dass ein bestimmter Überlapp der Bodenbearbeitungseinheit zwischen den Mäanderbahnen eingehalten wird. Dieser verbleibende Überlapp dient zur Kompensation von Ungenauigkeiten in der lokalen Bewegungsausführung. Im Beispiel aus Fig. 3 würden also mehrere Mäanderbahnen ausgeführt werden um die erkannten Orientierungsfehler zu kompensieren. Alternativ oder in Kombination könnte auch der Abstand der Mäanderbahnen variiert werden um einen schnelleren Ausgleich des Orientierungsfehlers zu ermöglichen.

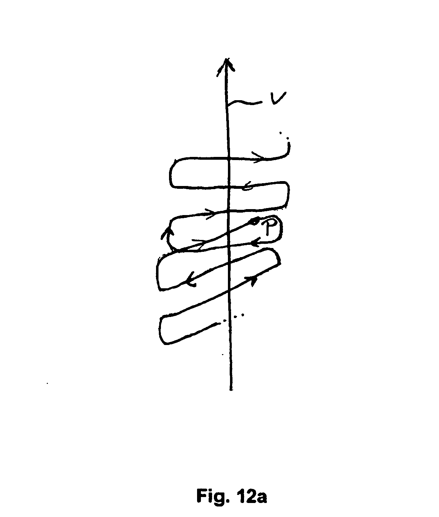

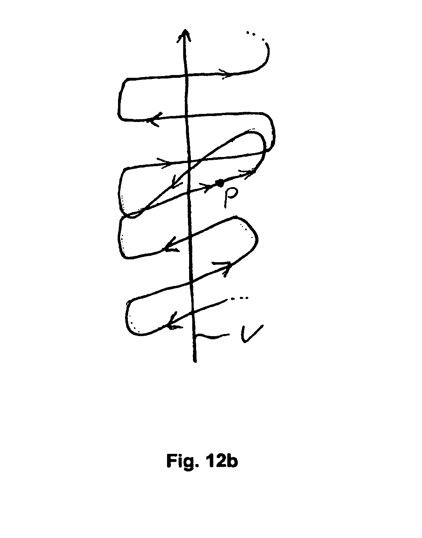

Für den Fall dass eine beschränkte Anpassung der Bewegung bei großem Positions- und/oder Orientierungsfehler nicht gewünscht ist kann hierzu auch die Bewegungsfolge ggf. entsprechend rückwirkend entlang der Vorschubbahn neu aufgesetzt werden. Siehe hierzu auch Fig. 12a und Fig. 12b.

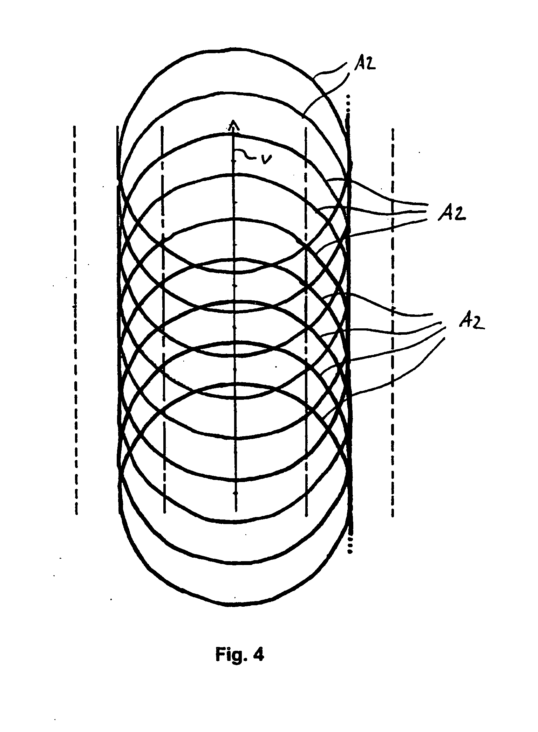

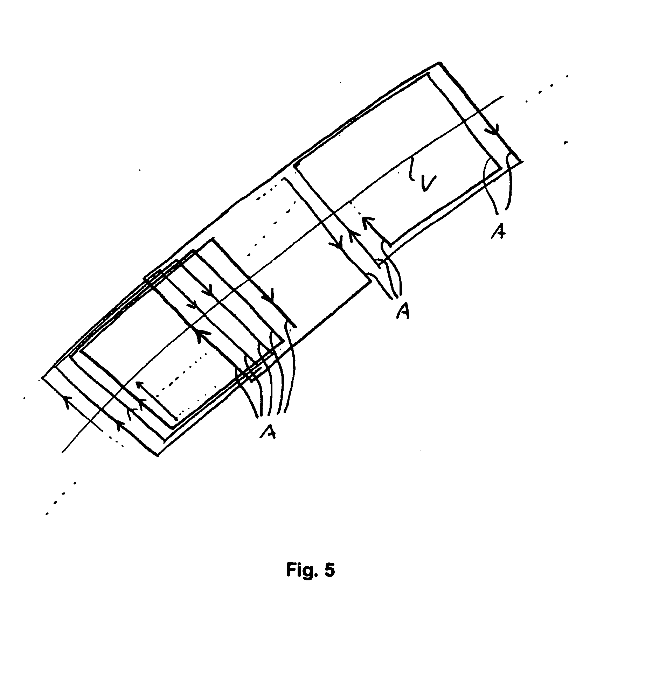

Fig. 4 zeigt eine weitere bevorzugte Ausführungsform dieser Erfindung. Hierbei werden kreisförmige, im Spezialfall auch elliptische Ausscherbewegungen A2 zur lokalen Flächendeckung innerhalb der Überdeckungsstreifen eingesetzt. Diese Art der Flächenfüllung führt auch bei idealer Ausführung zu einer ungefähr doppelten Überstreichung der Fläche und somit zur Erhöhung der Wahrscheinlichkeit dass die Fläche vollständig überstrichen wird. Je nach Art des Lokalisierungsverfahrens kann diese flächenfüllende Bewegung vorteilhaft sein da hier Ausscherbewegungen nicht nur in einer Vorzugsrichtung erfolgen. Dies ist auch bei der in Fig. 5 dargestellten Ausführungsform der Fall. Der Start dieser lokal Flächen füllenden Bewegung erfolgt vorzugsweise mittels einer archimedischen Spirale bis zum Erreichen des gewünschten Kreisdurchmessers. Fig. 5 zeigt ein Muster das entlang der Vorschubbahn abgefahren wird.

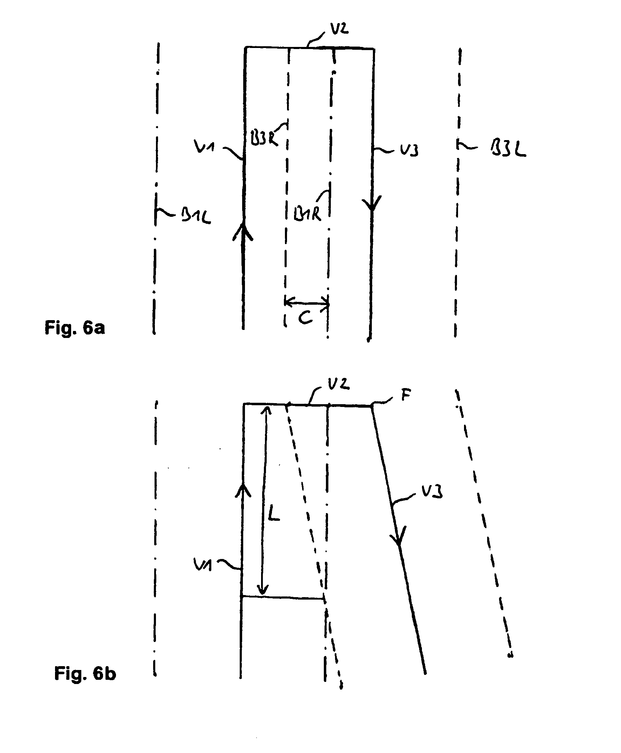

Fig. 6a zeigt einen Vorschub auf parallel geplanten und parallel ausgeführten Bahnen V1 und V3 und Fig. 6b einen Vorschub auf parallel geplanten aber nicht-parallel ausgeführten Bahnen, so dass aber eine Flächenüberdeckung bis zu einem Abstand L vom Rand noch gegeben ist. Die geplante Wirkbewegung entlang V1 erstreckt sich bis zur durch Strichpunktlinien dargestellten linken (B1L) und rechten Begrenzungslinie (B1R). Die geplante Wirkbewegung entlang V3 erstreckt sich bis zur durch gestrichelte Linien dargestellten linken (B3L) und rechten Begrenzungslinie (B3R). Entlang des Vorschubsegmentes V2 wird in diesem Beispiel keine überlagerte Wirkbewegung ausgeführt. Der wirksame Überlapp zwischen den geplanten Bahnsegmenten V1 und V3 welche durch Wirkbewegung überlagert ausgeführt wurden entspricht bei fehlerfreier Ausführung gemäß Fig. 6a der Planung dem Abstand C. Wird eine maximale Unsicherheit in der Positionsbestimmung von r angenommen wird der Überlapp C vorzugsweise auf 2r festgelegt um eine Flächendeckung zu gewährleisten. Im praktischen Einsatz kann es auch vorteilhaft sein C kleiner als 2r gemäß Erfahrungswerten zu wählen. Hier hat man zwar keine Gewährleistung der Flächendeckung jedoch kann es aus Effizienzgründen sinnvoll sein eine gewisse Wahrscheinlichkeit von unbearbeiteten Flächenstücken in Kauf zu nehmen.

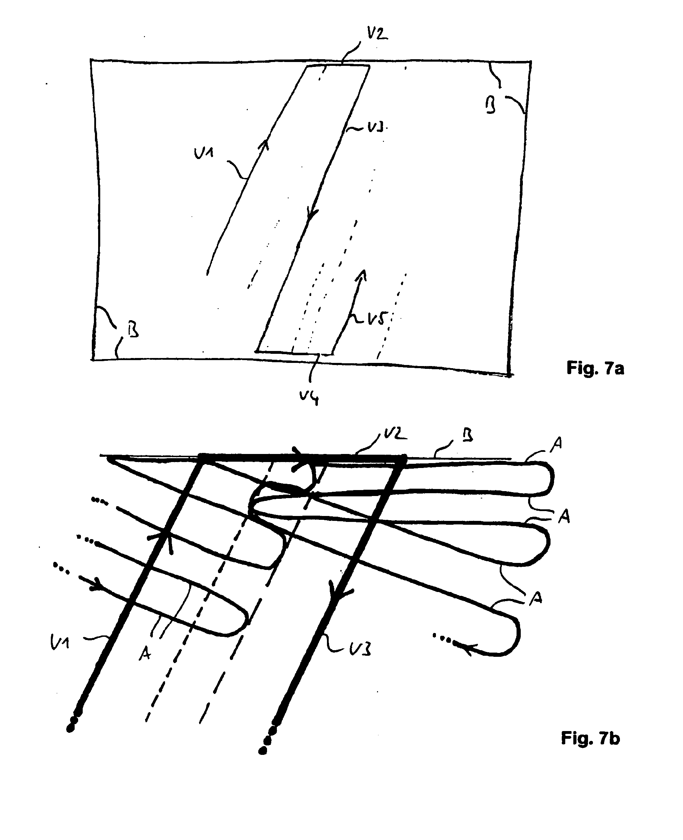

Das in Fig. 6b abgebildete Beispiel ist typisch für den Einsatz von ausschließlich inkrementeller Lokalisierungssensorik (z.B. basierend auf Odometrie und Gyroskopsensor). Die geplante Vorschubbewegung samt überlagerter Wirkbewegungen entspricht der aus Fig. 6a. Bei der Ausführung ist jedoch hier beim Übergang von, V2 nach V3 (Position F) ein Fehler in der Winkelbestimmung des Mobilgerätes aufgetreten. Das Mobilgerät hat hier im Allgemeinen keine Möglichkeit diese Art von Fehlern wie auch Fehler welche sich langsamer z.B. durch Drift eines Gyroskops oder durch Integrationsungenauigkeiten und/oder geringem Schlupf zwischen Rad und Untergrund in der odometrischen Positionsbestimmung auftreten zu erkennen. Diese Fehler haben zur Ursache, dass im Falle ausschließlich inkrementeller Positionsbestimmung auch bei Vorschubbewegungen mit überlagerten Wirkbewegungen eine Flächendeckung nicht gewährleistet werden kann. Für einige Anwendungen, insbesondere Anwendungen bei denen aus Gründen der Wirtschaftlichkeit auf kein, oft kostspieliges, absolutes Lokalisierungssystem zurückgegriffen werden kann, macht es dennoch Sinn das Verfahren dieser Erfindung, zur Erzeugung einer Überbreite gegenüber der eigentlichen Arbeitsbreite einzusetzen: Erhält man beispielsweise bei gegebenen Vorschubbewegungen und gegebenen Wirkbewegungen in der Regel eine Überlappung bis zu einer Distanz L so können derartige Vorschub- und Wirkbewegungen zur Flächenabdeckung von Gebieten wie beispielsweise dem in den Fig. 7a und 7b dargestelltem eingesetzt werden.

Fig. 7a zeigt eine Einsatzmöglichkeit des Verfahrens zur Erzeugung einer Überbreite beim Einsatz auf einem mobilen Bodenbearbeitungsgerät welches über kein System zur absoluten Positionsbestimmung verfügt. Stellvertretend für eine Vielzahl möglicher Anwendungsfälle kann man hier konkret das Szenario eines Mähroboters beim Mähen eines Fußballfeldes betrachten. Das Fußballfeld ist hierbei derart begrenzt, dass das Mobilgerät diese Begrenzungen B mit seinen Sensoren erkennen kann. Es kann sich hier beispielsweise um eine Begrenzung durch eine bestromte Drahtschleife handeln welche durch geeignete Sensoren zur Magnetfelderfassung erkannt werden. Genauso könnte die Begrenzung durch Hindernisse (Banden) erfolgen welche mit Sensoren wie Ultraschall oder IR (Infrarot) bzw. Lasersensoren erfasst werden können. Im Allgemeinen ist auch jegliche Mischform der Begrenzung zugelassen welche mittels der Sensorik des Mobilgerätes erkannt werden können. In Fig. 7b wird eine Vorschubbewegung samt überlagerter Wirkbewegung V1 solange ausgeführt bis eine Berandung des Einsatzgebietes erkannt wird. Die Wirkbewegungen entlang V1 werden durch diese Berandung limitiert ausgeführt. Dann wird eine weitere Vorschubbewegung V2 und eine hier parallel zur Vorschubbewegung V1 geplante Vorschubbewegung V3 ausgeführt. Die Vorschubbewegungen am Übergang V1 nach V3 mittels V2 werden vorzugsweise so ausgeführt dass eine Flächendeckung im Randbereich erfolgt. Ein Beispiel für eine derartige Ausführung ist in Fig. 7b dargestellt. Diese Vorgehensweise kann solange wiederholt werden, bis eine Terminierung z.B. durch eine Ecke des Sportplatzes bedingt von der Steuerung ausgelöst wird. Wiederholt man die Ausführung von dieser Ecke aus dann in entgegengesetzter Richtung wiederum bis zur Terminierung an einer Ecke, erhält man eine Flächendeckung des Sportplatzes bei max. ca. 2-facher Überlappung.

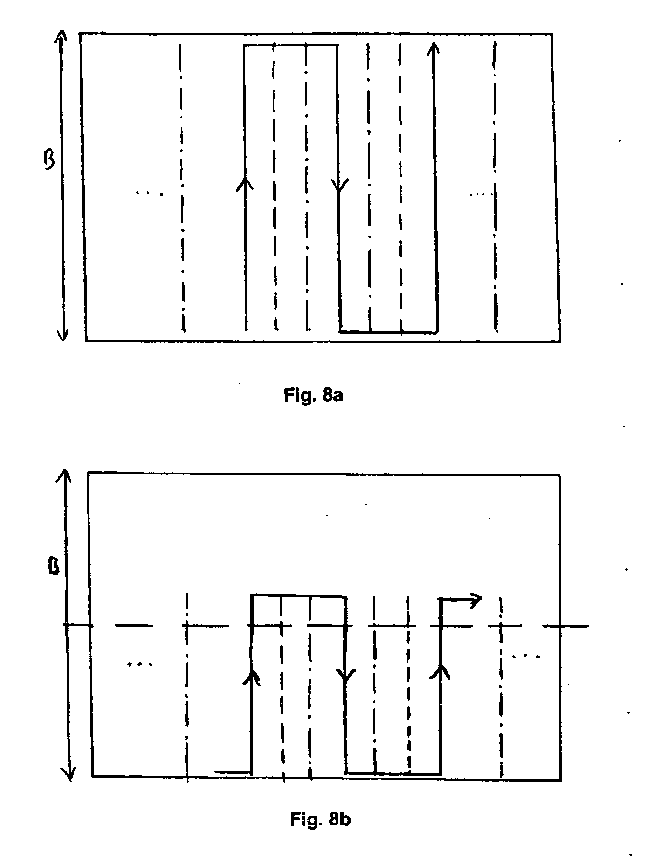

Fig. 8a und Fig. 8b zeigt eine weitere vorzugsweise Einsatzmöglichkeit des Verfahrens mit Überbreite am für Mobilgeräte ohne absolute Positionsbestimmung bei der Flächendeckung eines rechteckig begrenztem Gebietes (z.B. eines Fußballfeldes). Hier sind parallel verlaufende Bahnen V1, V3 usw. senkrecht zur Arbeitsbereichsbegrenzung für den Vorschub mit überlagerten Wirkbewegungen geplant. Unter Kenntnis des lokalen erfassten Berandungsverlaufes wird hier vorzugsweise auch eine Positions- und oder Richtungskorrektur während des randnahen Mähens beim Übergang zwischen zwei Parallelbahnen vorgenommen. Aus Gründen der anhand Fig. 6b erläuterten typischen maximalen Länge L bei der der Überlapp zwischen den Vorschubbewegungen überlagerten Wirkbewegungen noch ausreichend ist, ist es sinnvoll die Parallelbahnen entlang der kürzeren Seite des Rechteckes aufzusetzen (siehe Fig. 8a). Voraussetzung hierfür ist, dass die Länge der kurzen Seite kleiner gleich L ist. Ist dies nicht der Fall so werden vorzugsweise die Parallelbahnen (Vorschub plus überlagerte Wirkbewegung) wie in Fig. 8b dargestellt ausgehend von der Berandung der langen Seiten bis kurz über Mitte geplant und ausgeführt.

Die beschriebene Vorgehensweise zum Einsatz des Verfahrens auf Überbreite bei Mobilgeräten ohne absolute Positionsbestimmung ist prinzipiell keineswegs auf die hier ausgeführten Parallelbahnen sowie rechteckig begrenzten Einsatzgebieten beschränkt.

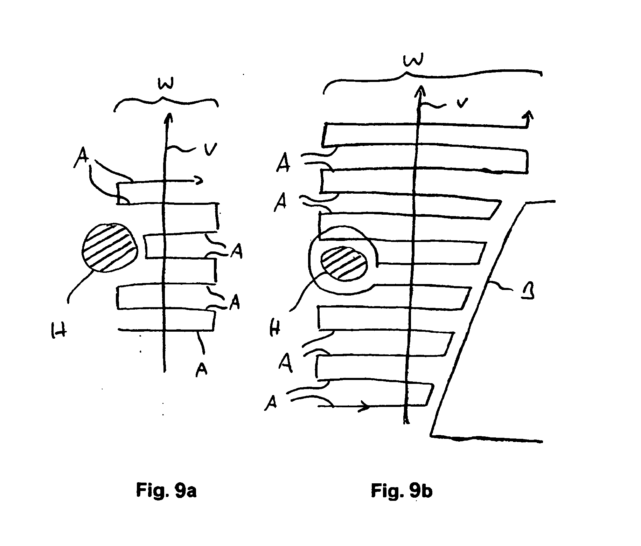

Fig. 9a und Fig. 9b zeigen zwei Wirkbewegungen W, die sich an ein Hindernis H innerhalb der Arbeitsfläche sowie an die Berandung B der Arbeitsfläche anpassen.

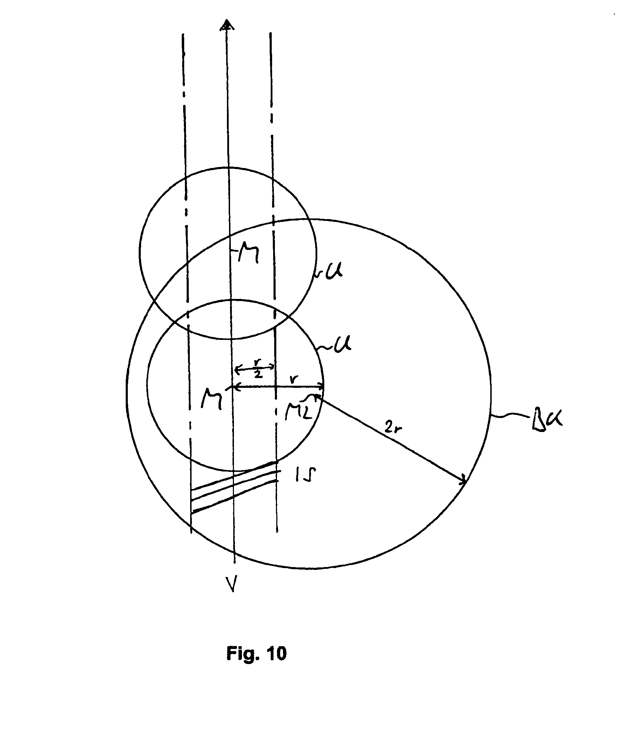

Fig. 10 zeigt einen Streifen der Breite r sowie zwei Unsicherheitskreise mit Radius r, deren Mittelpunkte M auf der Mitte des Streifens im Abstand von 1,5r liegen. Um den unteren der beiden Unsicherheitskreise ist ein Bearbeitungskreis BK mit Radius 2r gelegt. Der Mittelpunkt M2 des Bearbeitungskreises liegt im unteren Unsicherheitskreis, so dass der Bearbeitungskreis diesen umschließt.

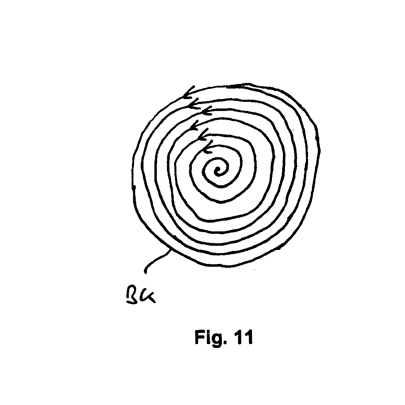

Fig. 11 zeigt einen Bearbeitungskreis BK, der durch eine Spirale mit anschließender Volldrehung bei konstantem Radius überstrichen wird. Es ist vorteilhaft im Kern hier eine archimedische Spirale einzusetzen, die ggf. so angepasst ist, dass sich der Bahnabstand bei weiter außen liegenden Bahnen der Bahnabstand verkleinert wird.

Fig. 12a zeigt eine Wirkbewegung, die an einem Punkt P eine Richtungskorrektur erfährt. Das erste, sich daran anschließende Wendemanöver wird entgegen der Vorschubrichtung ausgeführt um die Flächenfüllung entlang der Vorschubbahn zu wahren. Fig. 12b zeigt eine Variante davon. Am Punkt P wird festgestellt, dass eine Richtungskorrektur erforderlich ist. Diese wird allerdings nicht sofort ausgeführt, sondern das Bearbeitungsgerät setzt seine Bewegung zunächst fort und dreht bei den beiden folgenden Wendemanövern um einen größeren Winkel als bei den unmittelbar vorausgegangenen Wendemanövern. Auch dadurch wird die Flächenfüllung gewahrt.

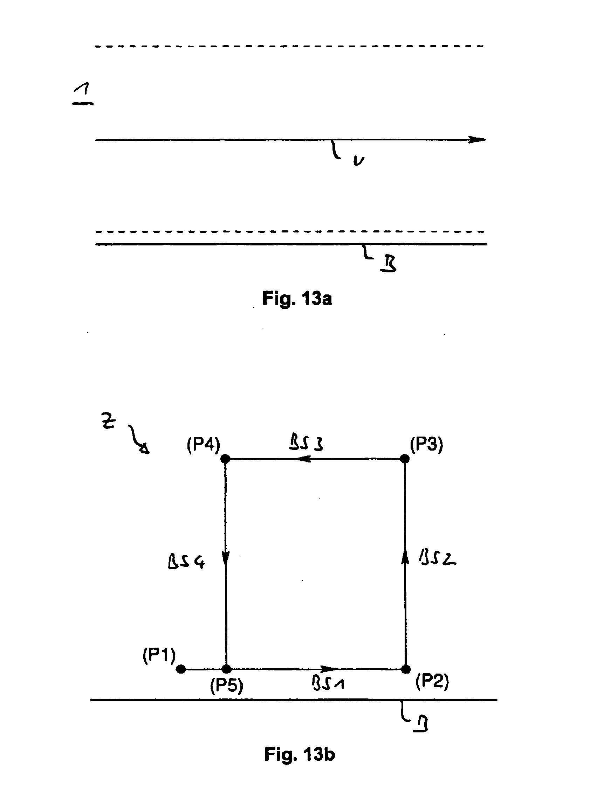

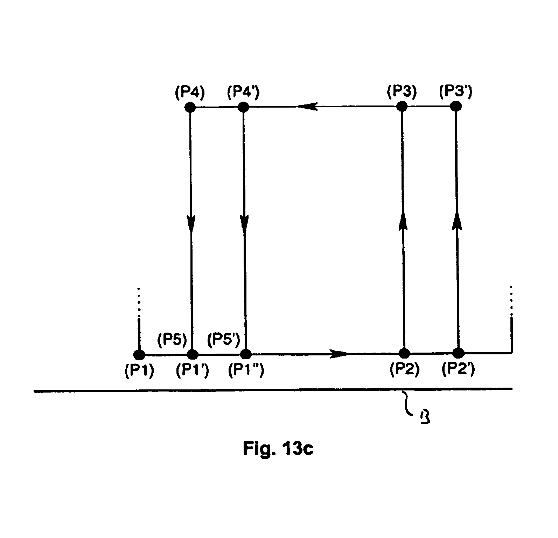

Fig. 13a zeigt eine Variante des Verfahrens, bei welcher der Vorschub V parallel zur Begrenzung B der Arbeitsfläche 1 erfolgt. Fig. 13b zeigt einen Zyklus Z der Ausscherbewegung, welcher entlang der Vorschubrichtung versetzt mehrfach wiederholt wird und so die Wirkbewegung ergibt. Der Zyklus Z setzt sich aus den auf einander folgenden einzelnen Bewegungsschritten BS1 bis BS4 zusammen. Der Bewegungsschritt BSi führt dabei von Punkt Pi zu Punkt Pi+1. Der Endpunkt P5 des Zyklus Z fällt dabei mit dem Startpunkt P1' des folgenden Zyklus Z' zusammen, siehe Fig. 13c.

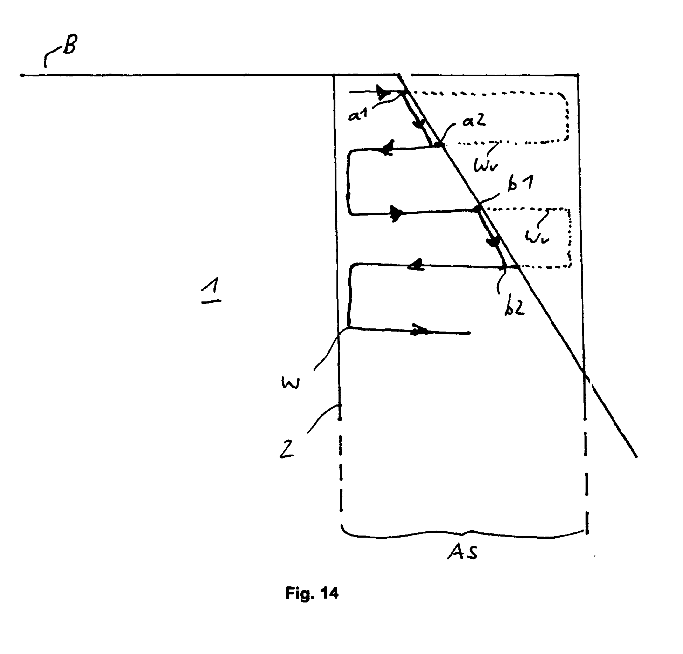

Fig. 14 zeigt eine Variante des Verfahrens, bei dem die Wirkbewegung an die Außenkontur (Begrenzung B) der Arbeits-Fläche 1 angepasst wird. Dabei werden mehrfach zwei Punkte (a1, a2; b1, b2) miteinander verbunden, an denen die zunächst vorgesehene Wirkbewegung Wv die Arbeits-Fläche 1 verlässt und dann wieder zurückkehrt.

Um eine ca. zweifache Überstreichung der Fläche zu vermeiden kann die Zyklenfolgen vorzugsweise so ausgeführt sein, dass bei vollständig überstrichener Teilfläche die Zyklenfolge durch Verlängerung von BS1 weiter entlang des Vorschubs vorschoben wird. Siehe hierzu auch das Beispiels in Fig. 5 in dem eine vergleichbare Zyklenfolge entlang eines nicht geradlinigen Vorschubs dargestellt ist.

Während des Schrittes BS1 kann durch geeignete Sensorik die Lage des Fahrzeuges relativ zur Berandung gemessen werden, so dass spätestens bei Erreichen des Punktes P2 die Schätzung der Fahrzeugorientierung und eine Dimension (quer zur Vorschubrichtung) der Schätzung der Fahrzeugposition korrigiert werden können. Diese Korrektur äußert sich in vorteilhafter Weise dadurch, dass die Länge des Schrittes BS2 (d.h. die Breite des äußeren Überdeckungsstreifens) gleich der Breite des durch die Wirkbewegung sicher zu überdeckenden Streifens (d.h. des inneren Überdeckungsstreifens) gewählt werden kann. Hierdurch kann eine Überdeckung des Einsatzgebietes in kürzerer Zeit und somit effizienter durchgeführt werden.

Insbesondere eignet sich dieses Verfahren für die Steuerung eines Reinigungsroboters für den Reinigungseinsatz in z.B. Turnhallen.

### Bezugszeichenliste

- 1: Arbeitsfläche
- 2: Überdeckungsstreifen
- V: Vorschubbahn
- V1, V3: parallel ausgeführte Bahnen
- A: Ausscherbewegung
- A2: elliptische Ausscherbewegung
- B: Begrenzung
- BSi: Bewegungsschritt
- BK: Bearbeitungskreis
- H: Hindernis
- U: Unsicherheitskreis
- M: Mittelpunkt
- W: Wirkbewegung
- Wv: vorgesehene Wirkbewegung
- a1, a2: Punkt
- b1, b2: Punkt
- AS: äußerer Überdeckungsstreifen
- IS: innerer Überdeckungsstreifen
- Δp: Unsicherheit
- Mn: Mäanderbewegung
- Z: Zyklus
- Pi: Punkt

## Patentansprüche

1. Verfahren zum Abfahren einer Arbeits-Fläche (1) mit einem selbstfahrenden Flächenbearbeitungsgerät (Mobilgerät) mit einer Bearbeitungsvorrichtung, wobei diese eine Arbeitsbreite definiert,
wobei die Breite eines Überdeckungsstreifens (2) größer als die Arbeitsbreite ist, wobei die Arbeitsfläche durch mehrere teilweise überlappende Überdeckungsstreifen (2) mit der Bearbeitungsvorrichtung überstrichen wird,
wobei die flächendeckende Bearbeitung eines Überdeckungsstreifens (2) durch Abfahren mit der Bearbeitungsvorrichtung in einer Wirkbewegung (W) resultierend aus einer Ausscherbewegung (A) um einen geplanten Vorschub entlang des Verlaufs des Überdeckungsstreifens erfolgt, **dadurch gekennzeichnet,**
**dass** auftretende Fehlausführungen in Richtung und/oder Länge der Wirkbewegung zur Definition eines äußeren und inneren Überdeckungsstreifens verwendet werden, wobei der äußere Überdeckungsstreifen als der Streifen charakterisiert wird der bei angenommener oder festgestellter Unsicherheit in der Positions- und Orientierungsbestimmung zusätzlich abgefahren werden muss um den inneren Überdeckungsstreifen mit der Bearbeitungsvorrichtung abzudecken.

2. Verfahren zum Abfahren einer Arbeits-Fläche nach Anspruch 1,
**dadurch gekennzeichnet,**
**dass** die Überdeckungsstreifen (2) zusammenhängend und wenigstens teilweise nebeneinander liegend entlang einer geplanten Vorschubbahn (V) verlaufen.

3. Verfahren zum Abfahren einer Arbeits-Fläche nach einem der Ansprüche 1 bis 2,
**dadurch gekennzeichnet,**
**dass** die Überdeckungsstreifen und/oder die Vorschubbahn und/oder die Ausscherbewegungen im Wesentlichen kreisförmig verlaufen und/oder wenigstens teilweise Kreisbahnabschnitte bilden und insbesondere wenigstens teilweise eine Spirale bilden.

4. Verfahren zum Abfahren einer Arbeits-Fläche nach einem der Ansprüche 1 bis 2,
**dadurch gekennzeichnet,**
**dass** die Überdeckungsstreifen und/oder die Vorschubbahn und/oder die Ausscherbewegungen im Wesentlichen zykloidenartig verlaufen.

5. Verfahren zum Abfahren einer Arbeits-Fläche nach einem der Ansprüche 1 bis 2,
**dadurch gekennzeichnet,**
**dass** die Überdeckungsstreifen und/oder die Vorschubbahn und/oder die Ausscherbewegungen im Wesentlichen Bahnen von Lissajous-Figuren beschreiben.

6. Verfahren zum Abfahren einer Arbeits-Fläche nach einem der Ansprüche 1 bis 2,
**dadurch gekennzeichnet,**
**dass** die Überdeckungsstreifen und/oder die Vorschubbahn und/oder die Ausscherbewegungen im wesentlichen mäanderförmig nebeneinander liegend sind.

7. Verfahren zum Abfahren einer Arbeits-Fläche nach einem der Ansprüche 1 bis 2,
**dadurch gekennzeichnet,**
**dass** die Überdeckungsstreifen und/oder die Vorschubbahn und/oder die Ausscherbewegungen im wesentlichen geradlinig oder der Krümmung der Vorschubbahn angepasst in Form einer Rechteckspirale angeordnet sind.

8. Verfahren zum Abfahren einer Arbeits-Fläche nach einem der vorhergehenden Ansprüche,
**dadurch gekennzeichnet,**
**dass** die Form des geplanten Vorschubs und/oder der überlagerten Ausscherbewegungen an die Außenkontur der Arbeits-Fläche und darin liegende auszusparende Bereiche angepasst wird **dadurch**, dass eine Wirkbewegung in einem oder mehreren Abschnitten je zwischen zwei Punkten der Arbeitsflächenberandung durch das Innere der Arbeitsfläche, insbesondere entlang der Arbeitsflächenberandung, verläuft, wobei die zwei Punkte insbesondere **dadurch** festgelegt sein können, dass eine zunächst vorgesehene Wirkbewegung die Arbeitsfläche an einem der beiden Punkte verlässt und am anderen zurückkehrt.

9. Verfahren zum Abfahren einer Arbeits-Fläche nach Anspruch 1 bis 2,
**dadurch gekennzeichnet,**
**dass** bei Erkennung einer Fehlausführung der Bewegung entlang von Teilstücken des Bewegungsmusters eine Korrektur der Bewegungsausführung des selbstfahrenden Flächenbearbeitungsgeräts entsprechend der Fehlausführung in Position und/oder Richtung zu den Werten des Bewegungsmusters hinzugefügt wird oder ein eigenständiges Korrekturmanöver durchgeführt wird, so dass in der weiteren Abfolge von Teilstücken Fehlausführungen vermieden oder gemindert werden können, wobei die Fehlausführung insbesondere erkannt wird durch Vergleich von Soll- mit sensorisch gewonnenen Ist-Daten oder mit vermittels einer absoluten Lokalisierung gewonnener Daten oder durch Vergleich von tatsächlichem und erwartetem Aufschlagwinkel auf eine Berandung der Arbeits-Fläche oder eine hierzu in der Arbeitsfläche vorgesehene durch Sensoren erkennbare Navigationslinie.

10. Verfahren zum Abfahren einer Arbeits-Fläche nach Anspruch 9,
**dadurch gekennzeichnet,**
**dass** als Korrekturmanöver die Wirkbewegung ein Teilstück rückwärts wiederholt wird oder dass die Überdeckungsstreifen und/oder die Vorschubbahn und/oder die Ausscherbewegungen neu geplant werden.

11. Verfahren zum Abfahren einer Arbeits-Fläche nach Anspruch 8 oder 9,
**dadurch gekennzeichnet,**
**dass** wenn eine Flächendeckung im Überdeckungsstreifen ausbleibt oder bei Fortsetzung der Wirkbewegung ausbleiben wird, dann erfolgt ein Abfahren entlang der sich ändernden Schnittkante im Überdeckungsstreifen bis die Fehlüberdeckung beseitigt ist.

12. Verfahren zum Abfahren einer Arbeits-Fläche nach einem der vorhergehenden Ansprüche,
**dadurch gekennzeichnet,**
**dass** der Vorschub entlang einer hierzu in der Arbeitsfläche vorgesehenen und durch Sensoren erkennbaren Navigationslinie oder entlang einer Berandung der Arbeits-Fläche erfolgt und dass relativ zum Vorschub unter einem Abstoßungswinkel eine Bewegung des Mobilgeräts vollzogen wird
und geplante Bewegungsmuster zur Überstreichung von Teilflächen der Arbeitsfläche ausgeführt werden.

13. Verfahren zum Abfahren einer Arbeits-Fläche nach Anspruch 12,
**dadurch gekennzeichnet,**
**dass** das Bewegungsmuster so ausgestaltet ist, dass ein Zurückkehren zur Navigationslinie nach wenigen gefahrenen Teilstücken und/oder geringer zurückgelegter Distanz erfolgt und eine erneute Abstoßung unter einem von der Steuerungseinrichtung gemäß der erfassten Richtung und/oder der Position in der Umgebung und/oder dem Verlauf der Navigationslinie festgelegten Abstoßungswinkel vollzogen wird.

14. Verfahren zum Abfahren einer Arbeits-Fläche nach einem der vorhergehenden Ansprüche,
**dadurch gekennzeichnet,**
**dass** die Breite von Überdeckungsstreifen an Neigungen und/oder Unebenheiten innerhalb der Arbeitsfläche angepasst wird, insbesondere **dadurch**, dass die Breite der Überdeckungsstreifen proportional zur Geländeneigung und/oder Unebenheit vergrößert wird.

15. Flächenbearbeitungsgerät (FA) beinhaltend eine Steuerungseinrichtung (SE) zur Ausführung des Verfahrens nach einem der Ansprüche 1 bis 14 wobei es sich insbesondere um ein selbstfahrendes Gerät zur Bodenbearbeitung, insbesondere einen Rasenmäher oder ein Reinigungsgerät handelt.

## Claims

1. Method for moving over a work surface (1) with a self-propelled surface treatment device (mobile device) comprising a treatment apparatus, said treatment apparatus defining a working width,
the width of a covering strip (2) being greater than the working width, the work surface being traversed by a plurality of partially overlapping covering strips (2), by means of the treatment apparatus,
the treatment which covers the entire surface area of a covering strip (2) being carried out by moving over said covering strip with the treatment apparatus in an effective movement (W) resulting from a swinging-out movement (A) by a planned forward movement along the path of the covering strip,
**characterised in that**
faulty executions which occur in the direction and/or along the length of the effective movement are used to define an outer and an inner covering strip, the outer covering strip being **characterized** as the strip which, when uncertainty in the determination of position and orientation is assumed or established, has to be additionally moved along in order to cover the inner covering strip with the treatment apparatus.

2. Method for moving along a work surface according to Claim 1,
**characterised in that**
the covering strips (2) extend continuously and are located at least partially adjacent to one another along a planned forward movement path (V).

3. Method for moving along a work surface according to one of Claims 1 to 2,
**characterised in that**
the covering strips and/or the forward movement path and/or the swinging-out movements extend in a substantially circular manner and/or at least partially form circular path portions and, in particular, at least partially form a spiral.

4. Method for moving along a work surface according to one of Claims 1 to 2,
**characterised in that**
the covering strips and/or the forward movement path and/or the swinging-out movements extend in a substantially cycloidal manner.

5. Method for moving along a work surface according to one of Claims 1 to 2,
**characterised in that**
the covering strips and/or the forward movement path and/or the swinging-out movements substantially describe paths of lissajous figures.

6. Method for moving along a work surface according to one of Claims 1 to 2,
**characterised in that**
the covering strips and/or the forward movement path and/or the swinging-out movements are located adjacent to one another in a substantially meandering manner.

7. Method for moving along a work surface according to one of Claims 1 to 2,
**characterised in that**
the covering strips and/or the forward movement path and/or the swinging-out movements are arranged substantially in a straight line or are adapted to the curvature of the forward movement path in the form of a rectangular spiral.

8. Method for moving along a work surface according to one of the preceding claims,
**characterised in that**
the shape of the planned forward movement and/or the overlaid swinging-out movements is adapted to the outer contour of the work surface and regions to be omitted therein, as an effective movement extends in one or more portions in each case between two points of the edge of the work surface through the inside of the work surface, in particular along the work surface edge, the two points being able to be fixed, in particular, by an effective movement which is initially provided and which leaves the work surface at one of the two points and returns at the other.

9. Method for moving along a work surface according to Claim 1 to 2,
**characterised in that**
when identifying faulty execution of the movement along sections of the movement pattern, a correction of the execution of the movement of the self-propelled surface treatment device, corresponding in position and/or direction to the faulty execution, is added to the values of the movement pattern, or a separate correction manoeuvre is carried out, so that faulty execution may be avoided or reduced in the further series of sections, the faulty execution being identified, in particular, by the comparison of set-value data with actual data obtained by sensors, or by data obtained by means of absolute localisation or by the comparison of the actual and expected angle of contact relative to an edge of the work surface or a navigation line provided to this end in the work surface and able to be identified by sensors.

10. Method for moving along a work surface according to Claim 9,
**characterised in that**,
as a correction manoeuvre, the effective movement is repeated one section back or the covering strips and/or the forward movement path and/or the swinging-out movements are replanned.

11. Method for moving along a work surface according to Claim 8 or 9,
**characterised in that**
when an area is omitted in the covering strip or will be omitted when continuing the effective movement, a movement takes place along the changing cutting edge in the covering strip until the faulty covering is eliminated.

12. Method for moving along a work surface according to one of the preceding claims,
**characterised in that**
the forward movement takes place along a navigation line which is provided to this end in the work surface and is able to be identified by sensors, or along an edge of the work surface and **in that**, relative to the forward movement, a movement of the mobile device is performed at a repulsion angle and planned movement patterns are performed for traversing partial surfaces of the work surface.

13. Method for moving along a work surface according to Claim 12,
**characterised in that**
the movement pattern is configured so that a return to the navigation line takes place after a few sections have been covered and/or a short distance has been covered and a further repulsion is performed at a repulsion angle which is set by the control device according to the detected direction and/or the position in the environment and/or the path of the navigation line.

14. Method for moving along a work surface according to one of the preceding claims,
**characterised in that**
the width of covering strips is adapted to slopes and/or unevenness within the work surface, in particular by the width of the covering strips being extended proportionally to the slope of the terrain and/or unevenness.

15. Surface treatment device (FA) containing a control device (SE) for carrying out the method according to one of Claims 1 to 14, said surface treatment device being, in particular, a self-propelled device for surface treatment, in particular, a lawn mower or a cleaning device.

## Revendications

1. Procédé pour explorer une surface de travail (1) avec un appareil de traitement de surface (appareil mobile) autotracteur avec un dispositif de traitement, ce dispositif définissant une largeur de travail,
la largeur d'une bande de recouvrement (2) étant supérieure à la largeur de travail, la surface de travail étant couverte par plusieurs bandes de recouvrement (2) se chevauchant partiellement avec le dispositif de traitement,
le traitement couvrant la surface d'une bande de recouvrement (2) s'effectuant par l'exploration avec le dispositif de traitement dans un déplacement actif (W) résultant d'un mouvement de déboîtement (A) d'un avancement prévu le long du tracé de la bande de recouvrement,
**caractérisé en ce que**
des réalisations erronées qui apparaissent en direction et/ou dans la longueur du mouvement actif sont utilisées pour la définition d'une bande de recouvrement extérieure et d'une bande de recouvrement intérieure, la bande de recouvrement extérieure étant **caractérisée** comme étant la bande qui doit être explorée en supplément si l'on admet ou si l'on constate une incertitude dans la détermination de position et d'orientation pour couvrir la bande de recouvrement intérieure avec le dispositif de traitement.

2. Procédé pour explorer une surface de travail selon la revendication 1,
**caractérisé en ce que**
les bandes de recouvrement (2) sont agencées de façon continue et au moins partiellement de façon juxtaposée le long d'une bande d'avancement (V) prévue.

3. Procédé pour explorer une surface de travail selon l'une quelconque des revendications 1 à 2,
**caractérisé en ce que**
les bandes de recouvrement et/ou la bande d'avancement et/ou les mouvements de déboîtement sont agencés sensiblement en forme de cercle et/ou forment au moins partiellement des tronçons de trajectoire circulaires et forment en particulier au moins en partie une spirale.

4. Procédé pour explorer une surface de travail selon l'une quelconque des revendications 1 à 2,
**caractérisé en ce que**
les bandes de recouvrement et/ou la bande d'avancement et/ou les mouvements de déboîtement sont agencés sensiblement en forme de cycloïde.

5. Procédé pour explorer une surface de travail selon l'une quelconque des revendications 1 à 2,
**caractérisé en ce que**
les bandes de recouvrement et/ou la bande d'avancement et/ou les mouvements de déboîtement décrivent sensiblement des trajectoires de figures de Lissajous.

6. Procédé pour explorer une surface de travail selon l'une quelconque des revendications 1 à 2,
**caractérisé en ce que**
les bandes de recouvrement et/ou la bande d'avancement et/ou les mouvements de déboîtement sont juxtaposés sensiblement en formant un méandre.

7. Procédé pour explorer une surface de travail selon l'une quelconque des revendications 1 à 2,
**caractérisé en ce que**
les bandes de recouvrement et/ou la bande d'avancement et/ou les mouvements de déboîtement sont disposés sensiblement en ligne droite ou de façon adaptée à la courbure de la bande d'avancement sous la forme d'une spirale rectangulaire.

8. Procédé pour explorer une surface de travail selon l'une quelconque des revendications précédentes,
**caractérisé en ce que**
la forme de l'avancement prévu et/ou des mouvements de déboîtement superposés est adaptée au contour extérieur de la surface de travail et aux zones à évider et situées à l'intérieur par le fait qu'un mouvement actif dans une ou plusieurs sections se situe à chaque fois entre deux points du bord de la surface de travail par l'intérieur de la surface de travail, en particulier le long du bord de la surface de travail, les deux points pouvant être définis en particulier par le fait qu'un mouvement actif prévu d'abord quitte la surface de travail sur l'un des deux points et revient sur l'autre point.

9. Procédé pour explorer une surface de travail selon les revendications 1 à 2,
**caractérisé en ce que**,
si l'on détecte une réalisation erronée du mouvement le long de tronçons du modèle de déplacement, une correction de l'exécution de mouvement de l'appareil de traitement de surface autotracteur est ajoutée aux valeurs du modèle de déplacement en fonction de l'exécution erronée en position et/ou en direction ou bien une manoeuvre de correction autonome est mise en oeuvre, de sorte que, dans la succession ultérieure de tronçons, des exécutions erronées peuvent être évitées ou réduites, l'exécution erronée étant détectée en particulier par la comparaison de données théoriques avec des données réelles obtenues par capteur ou au moyen d'une localisation absolue de données obtenues par comparaison d'un angle d'impact réel et d'un angle d'impact escompté sur un bord de la surface de travail ou sur une ligne de navigation prévue à cet effet dans la surface de travail et détectable par des capteurs.

10. Procédé pour explorer une surface de travail selon la revendication 9,
**caractérisé en ce que**
le mouvement actif est répété sur un tronçon en arrière comme manoeuvre de correction ou **en ce que** les bandes de recouvrement et/ou la bande d'avancement et/ou les mouvements de déboîtement sont planifiés à nouveau.

11. Procédé pour explorer une surface de travail selon la revendication 8 ou 9,
**caractérisé en ce que**,
si une couverture de surface dans la bande de recouvrement fait défaut ou continuera à faire défaut en cas de poursuite du mouvement actif, on a une exploration le long de l'arête de coupe qui varie dans la bande de recouvrement jusqu'à ce que le recouvrement erroné soit éliminé.

12. Procédé pour explorer une surface de travail selon l'une quelconque des revendications précédentes,
**caractérisé en ce que**
l'avancement s'effectue le long d'une ligne de navigation prévue à cet effet dans la surface de travail et détectable par des capteurs ou le long d'un bord de la surface de travail, et **en ce qu'**un mouvement de l'appareil mobile est effectué par rapport à l'avancement sous un angle de répulsion et des modèles de déplacement planifiés sont exécutés pour le passage au-dessus de surfaces partielles de la surface de travail.

13. Procédé pour explorer une surface de travail selon la revendication 12,
**caractérisé en ce que**
le modèle de mouvement est conçu de telle sorte qu'un retour à la ligne de navigation intervient après quelques tronçons parcourus et/ou une faible distance parcourue et une nouvelle répulsion est effectuée sous un angle de répulsion qui est défini par le dispositif de commande selon la direction détectée et/ou la position dans l'environnement et/ou le tracé de la ligne de navigation.

14. Procédé pour explorer une surface de travail selon l'une quelconque des revendications précédentes,
**caractérisé en ce que**
la largeur de bandes de recouvrement est adaptée à des inclinaisons et/ou des inégalités à l'intérieur de la surface de travail, en particulier par le fait que la largeur des bandes de recouvrement est agrandie de façon proportionnelle à l'inclinaison de terrain et/ou à l'inégalité.

15. Appareil de travail de surface (FA) comprenant un système de commande (SE) pour la mise en oeuvre du procédé selon l'une quelconque des revendications 1 à 14, sachant qu'il s'agit en particulier d'un appareil autotracteur pour le traitement du sol, en particulier d'une tondeuse à gazon ou d'un appareil de nettoyage.
